# EUROPEAN PATENT APPLICATION

(11) **EP 1 850 125 A1**
(43) Date of publication of application: **31.10.2007**
(21) Application number: 06008682.4
(22) Date of filing: 26.04.2006
(51) Int. Cl.: G01N 29/036, G01N 29/22, G01N 29/024, G01N 29/032

(54) **Cell for measuring acoustical properties of a fluid sample**

(71) Applicant: TF Instruments, Inc., Monmouth Junction NJ 08852 (US)
(72) Inventor: Funck, Theodor, 37077 Göttingen (DE); Gau, Daniel, 64404 Bickenbach (DE); Maier, Alexander, 74821 Mosbach (DE); Dickopf, Stefan, 69118 Heidelberg (DE)
(74) Representative: Hertz, Oliver

(57) **Abstract**

The invention relates to a cell for measuring acoustical properties of a fluid sample comprising cell body having first and second opposite substantially flat end faces and forming at least one sample cavity for receiving a sample to be investigated and first and second electro-acoustical transducer wafers each having first and second main surfaces, said first main surface of said first and second transducers being positioned at said first and second end surfaces respectively, of said cell body. The invention proposes to provide at least one sealing means at one end face.

## Description

### FIELD OF THE INVENTION

The invention relates to a cell for measuring acoustical properties of a fluid sample comprising cell body having first and second flat end faces and forming at least one sample cavity for receiving a sample to be investigated and first and second electro-acoustical transducer wafers each having first and second main surfaces, said first main surface of said first and second transducers being positioned at said first and second end surfaces respectively, of said cell body.

### BACKGROUND OF THE INVENTION

Acoustical methods for determining acoustical parameters of fluid samples, such as speed and attenuation of acoustical waves, and cells for performing such measurements are well known in the art. A preferred method for investigating fluid samples of small volume is the so-called resonator method.

A measurement cell for use in a resonator method is disclosed in international patent application WO 92/03732. This cell comprises a pair of thin, flat, wafer-like electro-acoustical transducers which are positioned on opposite front faces of an essentially cylindrical cell body to define at least one resonator chamber adapted to receive a liquid sample to be investigated. A plurality of sample chambers which share the same pair of electro-acoustical transducer wafers may be provided in a single cell body to provide comparison measurements of test samples and fluids of known properties.

The cell disclosed in WO 92/03732 is a sandwich structure or stack comprising an essential cylindrical main body forming the sample chamber or chambers, an acoustic transducer on each side of the main body and closing the axial ends of the sample chamber(s), and means for holding this structure together, i.e. end pieces and axial bolts or annular screw caps. Each sample chamber is accessible by a radial aperture in the wall of the main body through which a sample can be introduced. This aperture is closed by a flexible tubular membrane member which surrounds the cell body and serves to separate the sample from the surrounding. In operation the measurement cell is placed in an autoclave containing a pressurizing liquid. The pressure of the pressurizing liquid is increased by means of a piston pump and transmitted to the sample liquid by the flexible member which separates the sample and pressurizing liquids. One of the transducers is energized by high-frequency electrical waves of varying frequency and an output signal is obtained from the other transducer and processed to obtain desired information.

According to the publication of A. P. Sarvazyan et al. ("Ultrasonics" 29 (1991) pp. 119-124) each transducer of an acoustical resonator cell can be backed with liquid. In high pressure work the stress imposed on the transducers by a pressurized sample can be reduced by backing the transducers with the pressurizing liquid.

From WO 95/04929 a cell is known for measuring acoustical properties of fluid samples under high pressure. This cell comprises a cell body having first and second opposite flat end faces and forming at least one sample cavity for receiving a sample to be investigated, said cavity extending along an axis between end faces, and said body further having at least one lateral aperture forming a first body channel extending between said sample cavity and an opening at a circumferential outer surface of said body and first and second electro-acoustical transducer wafers each having first and second main surfaces, said first main surface of said first and second transducers being positioned at said first and second end surfaces, respectively, of said cell body.

The cell further comprises first and second end piece means having a flat end face and an end wall opposite to said end face and forming at least one first end piece cavity. Body, transducers and first and second end piece means form a stack.

This cell requires the use of a cell body having almost perfectly flat cell ends to ensure a tight fit between these cell ends and the transducers as the transducer are pressed against these cell ends. Therefore, high precision surfaces are required to ensure the cell's leak tightness. The manufacture of high precision surfaces is complex and expensive. Additionally, the necessity to provide flat surfaces makes leakage more likely under operating conditions of the cell.

### OBJECTIVE OF THE INVENTION

It is an objective of the present invention to provide a cell for determining acoustical parameters which overcomes or alleviates at least one of the above mentioned problems.

### SUMMARY OF THE INVENTION

The problem is solved by a cell comprising the features of claim 1. Advantageous embodiments of the invention are defined in the dependent claims.

According to the invention, a cell for measuring acoustical properties of a fluid sample comprises a cell body having first and second opposite end faces and forming at least one sample cavity for receiving a sample to be investigated, and first and second electro-acoustical transducer wafers each having first and second main surfaces, said first main surface of said first and second transducers being positioned at said first and second end surfaces, respectively, of said cell body, wherein at lest one of said end faces comprises at least one sealing means. Advantageously, the at least one sealing means provides a tight closure of the sample cavity without worsen of the flatness and surface quality of the cell body. The at least one sealing means provides a secure sealing without loss in performance of the cell. In particular, the parallelism of the transducers and the flexibility or capability of sliding between the cell body and the transducers are kept even in the complete operation temperature range of the cell.

For the purpose of the present patent application an end face or any other surface is regarded to be substantially flat in particular if the geometry of the surface, e.g. its roughness and/or is macroscopic deviations from a perfectly flat surface is such that providing a sealing element as described in claim 1 yields a fluid proof contact between two substantially flat surfaces.

Surfaces which yield a fluid proof contact without a sealing element are regarded as substantially flat as well. To test whether or not a surface is substantially flat two of such surfaces are pressed against each other with a pressure of 15 MPa. If the contact is fluid proof the surfaces are flat and therefore they are substantially flat as well. If a sealing means conforming to this patent application yields a fluid proof contact the surfaces as substantially flat.

If the contact is not fluid proof without a sealing element, but it is with a sealing element provided the surfaces are substantially flat, but not flat.

Preferably, an elastic retaining member, such as one or a plurality of resilient C-shaped clamps or clips or a helical spring are provided to exert axial pressure on the above described stack of cell components to hold it together.

According to another preferred feature of invention, the adjacent ends of the cell body and each end piece are formed with aligned circumferential grooves to receive a preferably annular member or ring for centring the transducer positioned between said ends. In addition, means, such as axial recesses may be provided in the grooves which in cooperation with corresponding extensions of the centring rings determine the mutual angular position of the cell body and the end pieces.

The construction and assembly of the measurement cells according to the invention is invention is simplified by using clamps, springs and similar fixing elements mounted on the outside of the cell assembly to maintain the stack of cell components in position and bias it by applying axial pressure. These elements provide a well defined and uniform axial pressure on the stack.

A first measure for providing reliable separation of the sample and pressurizing fluids is provided by manufacturing the mating surfaces of the cell stack with extremely high flatness and small roughness so that capillary forces can not cause the pressurizing fluid to penetrate between the mating surfaces even at moderate axial pressure urging said surfaces together.

Secondly, an extremely thin and compliant elastic membrane or sleeve material surrounding said body and end pieces is urged into the radial apertures by clamping rings or plugs to seal the radial apertures of the cell body and end pieces for reliably separating the sample liquid from the pressurizing liquid. The elastic material may be as thin as 0.2 mm and less so that no noticeable pressure difference can develop across the elastic element even at pressures up to and exceeding 150 MPa (1500 bar). Thus, for equalizing the pressures on the opposite sides of the transducers, the apertures of the end pieces are provided with similar elastic membranes as the filling apertures of the sample chamber.

Advantageously, the above grooves allow the insertion of an elastic seal or sealing compound, while the distance and the parallelism of the resonator will still be defined by the cell body. To achieve this, according to a preferred embodiment of the invention, the pressure from outer endpiece bodies is higher than necessary for the deformation of the sealing means. The pressure is exerted to the sealing means such that they do not protrude over the respective end faces. The sealing completely vanishes inside the groove and the position and flatness of the transducer is defined by the cell body.

### BRIEF DESCRIPTION OF THE DRAWINGS

Further objects, advantages and features of the invention will become apparent from the following description of preferred embodiments in connection with the accompany drawings, in which
- Fig. 1: is a sectional elevation view of an acoustical measurement cell according to a first embodiment of the invention, the section being along a line 1A-A in Fig. 2;
- Fig. 2: is a top view of the cell of Fig. 1
- Fig. 3: is a cross-section along a line B-B in Fig. 1
- Fig. 4: is a sectional view corresponding to Fig. 1 of another embodiment of the invention;
- Fig. 5: is a sectional view along a line V-V of Fig. 4;
- Fig. 6: is a sectional elevation view of a third embodiment of the invention; and
- Fig. 7: is a top view of the embodiment of Fig 6.

### DESCRIPTION OF THE PREFERRED EMBODIMENTS

The invention is described in the following with exemplary reference to the resonator cell described in WO 95/04929. It is emphasized, that the implementation of the invention is not restricted to this cell but rather possible with other cell types comprising a cell body forming at least one sample cavity and first and second electro-acoustical transducer wafers arranged at the cell body.

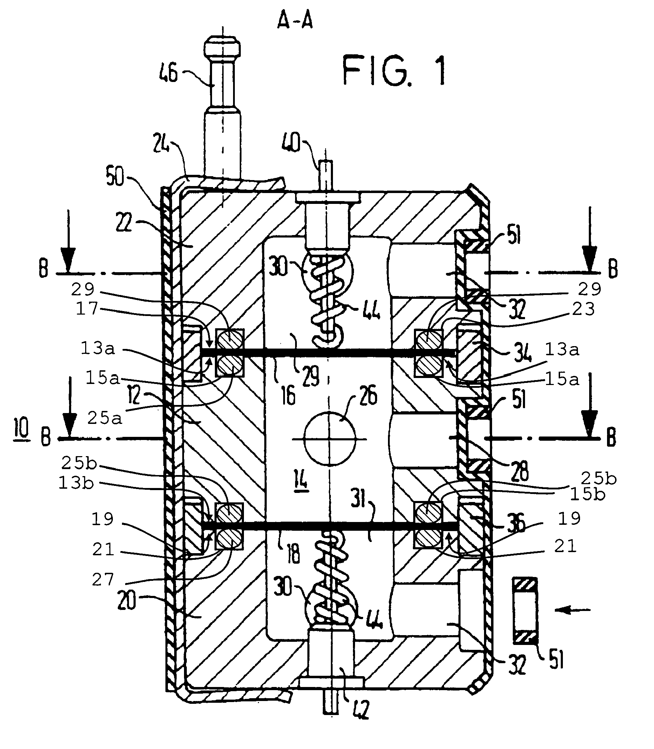

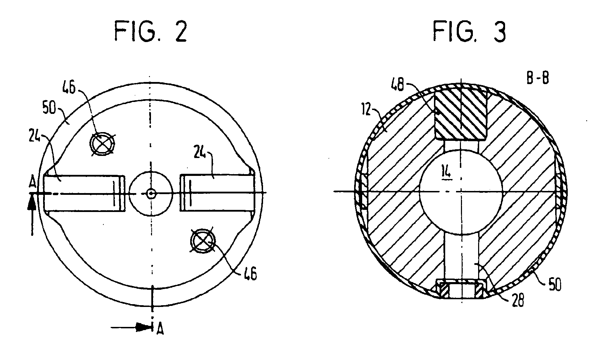

A preferred embodiment of a measurement cell according to the invention is schematically shown in Figs. 1 to 3. Generally, the cell comprises a cell body 12 having first and second opposite substantially flat end faces 13a, 13b and forming at least one sample cavity 14 for receiving a sample to be investigated, said cavity extending along an axis between end faces 13a, 13b, and said body further having at least one lateral aperture forming a first body channel 28 extending between said sample cavity and an opening at a circumferential outer surface of said body 12; first and second electro-acoustical transducer wafers 16, 18 each having first and second main surfaces, said first main surface of said first and second transducers being positioned at said first and second end surfaces 13a, 13b, respectively, of said cell body 12; first, inner electrode means on said first main surface of each transducer; second, outer electrode means on said second main surface of each transducer; first end piece means 20 having a substantially flat end face 19 and an end wall opposite to said end face 19 and forming at least one first end piece cavity 31, and further having at least one aperture forming a first end piece channel 32 extending between said end piece cavity and an opening at a circumferential outer surface of said first end piece means; said substantially flat end face 19 of said first end piece means being positioned at said second main surface of said first transducer; said at least one end piece cavity 31 having an opening at said end face, said opening being aligned with said at least one cavity 14 of said body 12; second end piece means 22 having a substantially flat end face 17 and an end wall opposite to said end face 17 and forming at least one second end piece cavity 29, and further having at least one aperture forming a second end piece channel 32 extending between said end piece cavity and an opening at a circumferential outer surface of said second end piece means; said substantially flat end face 17 of said second end piece means being positioned at said second main surface of said second transducer; said at least one second end piece cavity 29 having an opening at said end face, said opening being aligned with said at least one cavity 14 of said body 12; said body 12, said transducers 16, 18 and said first and second end piece means 20, 22 forming a stack, said end pieces being the axial terminal members of said stack; first electrical terminal means 42 mounted in an aperture of said end wall of said first end piece means 20 and electrically coupled to said second electrode means of said first transducer 18; second electrical terminal means 40 mounted in an aperture of said end wall of said second end piece means 22 and electrically coupled to said second electrode means of said second transducer 18; means 24 (in further Figs.: 52, 80, 86, 142, 146, 147) for applying axial pressure on said stack; sleeve means 50 made of elastic material tightly enclosing said stack and dosing said body channel; said electrical terminal means 40, 42 forming a pressure-tight seal with the respective end wall aperture, and said sleeve means 50 also closing said end piece channels 32 and, thus said end piece cavities 29, 31 so that the pressure is transmitted from the surrounding pressurizing fluid to fluid within the end pieces through said sleeve means to equalize the pressures on the opposite sides transducers 16, 18.

In particular, the cell 10 comprises the essentially cylindrical main body 12 which defines a cylindrical axial resonator cavity 14, further the first and second electro-acoustical transducers 16, 18, and end piece 20, 22 which are stacked as shown in Fig. 1. End piece 20 has an end face 19 which abuts transducer 18 and end piece 22 has an end face 17 which abuts transducer 16.

A pair of essentially C-shaped spring clamps 24 positioned on opposite sides of the stack hold the stack together and exert a well defined axial pressure on the elements of the stack. Transducers 16, 18 are piezoelectric crystal discs and are aligned in a highly parallel manner.

The spring clamps 24 are received by axially extending recesses of the outer wall of the main body 12 and the end pieces 20, 22 so that the spring clamps do not increase the radial dimension of the cell assembly.

The main body 12 has two diametrally aligned radial apertures 26, 28 which extend from the resonator cavity 14 to the cylindrical outer wall of body 12. Each end piece 20, 22 forms a compensation cavity 29, 31, respectively which is axially aligned with the sample cavity 14. A pair of radial apertures 30, 32 is provided in each end piece 20, 22. Apertures 26 and 30 have an enlarged outer portion. Apertures 28, 32 have a relatively shallow countersunk outer portion.

The body 12 has opposite end faces 13a, 13b. Each end face has at least one annular groove 15a, 15b, respectively. The end face 19 has an annular groove 21 and the end face 17 has an annular groove 23.

In groove 15a a gasket 25a is received which forms an elastic sealing. In groove 15b gasket 25b is received, in groove 21 a gasket 27 is received, and in groove 23 a gasket 29 is received, and in groove 23 a gasket 29 is received.

Gaskets 25a, 25b, 27, 29 are made from elastic material, such as rubber or a resilient metal, such as copper. Alternately and/or additionally a sealing compound is used. The axial pressure from the spring clamps 24 is chosen large enough to de form the gaskets 25a, 25b, 27, 29 so that they are completely received in their respective groove and do not protrude over the respective end face 13a, 13b, 19, 17. As a consequence a end face 13a, 17 and 13b, 19 are in close contact. Gaskets 25a, 25b, 27, 29 are removably received in the respective groove 15a, 15b, 21, 23.

The material of the gaskets is chosen such that the cell body 13 can move relatively to transducer 16, 18 when the temperature of the cell body 12 and the transducers champs. Therefore if the thermal expansion coefficient of the cell body material differs from the thermal expansion coefficient of the transducer material damage due to tensions can be prevented.

The transducers 16, 18 bear an electrode (not shown) on each main surface. The electrode is formed by a thin layer of gold or any other suitable metal. The prevent penetration of pressurized fluid from the outside of the cell into the resonator cavity.

In the embodiment shown, the outer cylindrical of the end pieces 20, 22 form opposed aligned circumferential grooves. Each pair of grooves forms an annular recess serving as seat for an annular member 34, 36, respectively, which serves as centring ring for the adjacent transducer 16, 18, respectively. The annular members 34, 36 also provide for proper axial alignment of the body 12 and the end pieces 20, 22 and facilitate the assembly of the stack.

Each end piece has an axial centre hole accommodating a terminal which comprises an insulating 40, 42 with a lead-through conductor and a spring 44 contacting the outside electrode of the respective transducer and serves for electrical connection of this electrode. The terminal forms a pressure-tight seal of the centre hole.

The end piece 22 is provided with axially protruding mounting elements 46 which serve for mounting the cell in a pressure vessel or autoclave (not shown).

In use, the resonator cavity 14 is filled with a liquid sample by means of a syringe, the hypodermic needle of which is pierced through the plug 48, When the sample fluid is injected, the air is displaced and escapes through the aperture 28 lifting the elastic sleeve 50 slightly. In the same way, preferably before the injection of the sample fluid, the cavities 29, 31 of the end pieces are filled with pressurizing liquid or another suitable liquid.

A clamping ring 51 is forced tightly into the outer countersunk portion of each aperture 28 and 32 after the cavities have been filled with appropriate liquids. The ring 51 urges the elastic sleeve into the respective aperture and forms a seal which resists the occurring pressure differences.

The cell is then mounted in an autoclave (not shown) filled with pressurizing liquid preferably a dielectric liquid such as ethanol, which in turn is pressurized by a piston pump or the like as well known in the art.

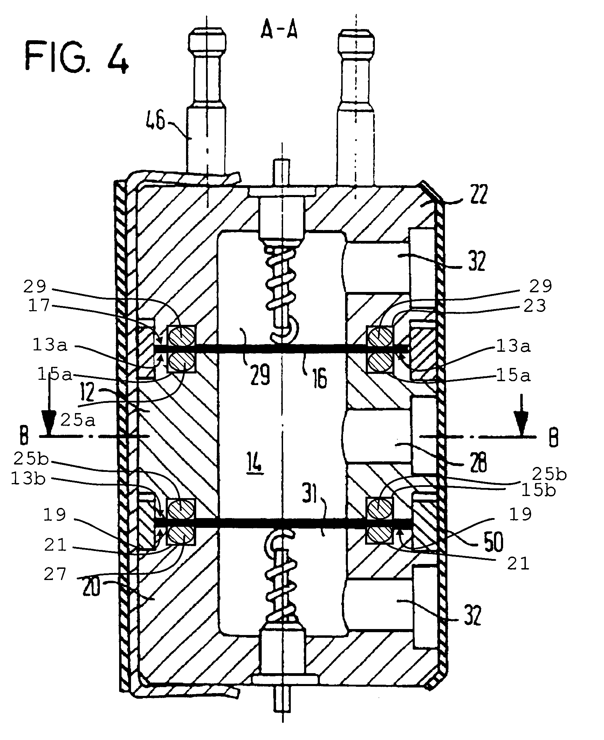

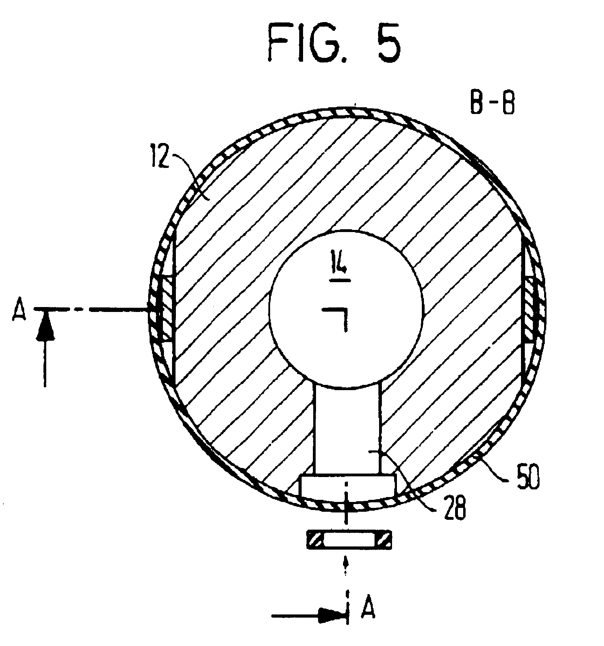

The cell schematically shown in Figs. 4 and 5 differs from the cell of Figs. 1 to 3 in that only one radial aperture 28, 32 is provided in the body 12 and each end piece 20, 22. For filling the cavities 14, 29 and 31, a removable tube is used for filing the cavities 14, 29 and 31 with liquid. In particular, the embodiment comprises annular grooves 21, 15b, 15a, 23 in the respective end face 19, 13b, 13a, 17 the grooves receiving respective gaskets 27, 25b, 25a, 29.

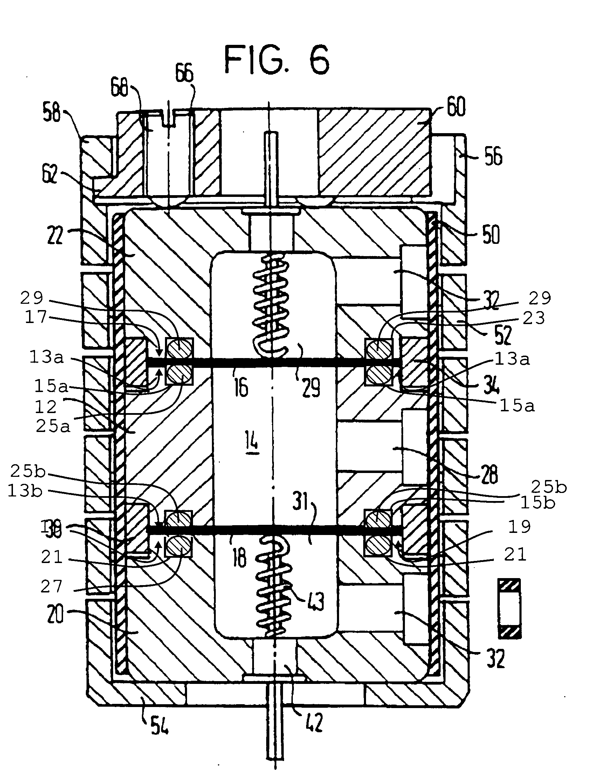

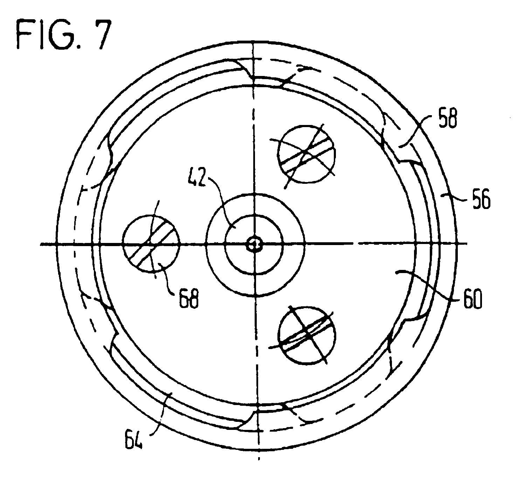

Figs. 6 and 7 show a measurement cell which is similar to that of Figs. 4 and 5 with the exception that the stack forming the cell proper is axially biased by a resilient element rather than by C-shaped clamps. More specifically, the stack consisting of the end piece 20, the transducer 18, the body 12, the transducer 16 and the end piece 22 and enclosed by the elastic sleeve 50 is received with close spacing by a heavy helical spring member 52. The spring has turns of rectangular cross-section to provide for the necessary axial force. A first end of the spring 52 forms an inwardly extending flange 54 on which the end piece 20 rests. The other end forms a flanged seat 56 which has a number of inwardly protruding locking elements 58. The seat 56 receives an annular disc 60 having a circumferential flange 62. The flange 62 has recessed portions 64, so that the disc 60 can be lodged in the seat 56 and locked therein by rotating the disc 60 and flange 62 relative to the locking elements 58 of the seat as shown in Fig. 7.

The disc is provided with three threaded holes 66 which receive set screws 68 by which the pressure bias exerted by the helical spring 52 on the cell stack can be adjusted and equalized. In particular, the embodiment comprises annular grooves 21, 15b, 15a, 23 in respective end face 19, 13b, 13a, 17 receiving respective gaskets 27, 25b, 25a, 29.

## Claims

1. A cell (10) for measuring acoustical properties of a fluid sample, said cell comprising:
- a cell body (12) having first and second opposite end faces (13a, 13b) and forming at least one sample cavity (14) for receiving a sample to be investigated, and
- first and second electro-acoustical transducer wafers (16, 18) each having first and second main surfaces, said first main surface of said first and second transducers being positioned at said first and second end surfaces (13a, 13b), respectively, of said cell body (12);
**characterized in that** at lest one of said end faces (13a, 13b, 17, 19) comprises at least one sealing means (25a, 25b, 27, 29).

2. The cell as claimed in claim 1, wherein both end faces (13a, 13b) of said cell body (12) comprise a sealing means (25a, 25b).

3. The cell as claimed in claim 2, wherein said cell body (12) comprises grooves (15a, 15b) in each of said end faces (13a, 13b) and the sealing means (25a, 25b) being received in said grooves (15a, 15b).

4. The cell as claimed in one of the preceding claims, further comprising:
- first end piece means (20) having a substantially flat end face (19) and an end wall opposite to said end face (19) and forming at least one first end piece cavity (31), and further having at least one aperture forming a first end piece channel (32) extending between said end piece cavity and an opening at a circumferential outer surface of said first end piece means; said substantially flat end face (19) of said first end piece means being positioned at said second main surface of said first transducer; said at least one end piece cavity (31) having an opening at said end face, said opening being aligned with said at least one cavity (14) of said body (12); and
- second end piece means (22) having a substantially flat end face (17) and an end wall opposite to said end face (17) and forming at least one second end piece cavity (29), and further having at least one aperture forming a second end piece channel (32) extending between said end piece cavity and an opening at a circumferential outer surface of said second end piece means; said substantially flat end face (17) of said second end piece means being positioned at said second main surface of said second transducer; said at least one second end piece cavity (29) having an opening at said end face, said opening being aligned with said at least one cavity (14) of said body (12);

5. The cell as claimed in claim 4, wherein both end faces (19, 17) of said first and second end pieces (20, 22) comprise a sealing means (27, 29).

6. The cell as claimed in claim 5, wherein said first and second end pieces (20, 22) comprise respective grooves (21, 23) in each of said end faces (19, 17) and the sealing means (27, 29) being received in said grooves (21, 23).

7. The cell as claimed in one of the preceding claims wherein said grooves (15a, 15b, 21, 23) are annular.

8. The cell as claimed in one of the preceding claims, wherein the sealing means is made of at least one of rubber and metal.

9. The cell as claimed in one of the preceding claims, wherein the cell comprises clamping means (24) to exert a defined pressure on said cell body (12), said first end piece (20), and said second end piece (22).

10. The cell as claimed in claim 10, wherein the clamping means (24) is set up to exert a pressure such that the sealing means (25a, 25b, 27, 29) do not protrude over the respective end face (13a, 13b, 19, 17).
